# EUROPEAN PATENT SPECIFICATION

(11) **EP 1 745 596 B1**
(45) Date of publication and mention of the grant of the patent: **21.11.2012**
(21) Application number: 04732599.8
(22) Date of filing: 13.05.2004
(51) Int. Cl.: H04W 48/18

(54) **ALLOCATING MOBILE STATIONS TO A CORE NETWORK IN AN UNLICENSED RADIO ACCESS NETWORK**
ZUTEILEN VON MOBILSTATIONEN ZU EINEM KERNNETZWERK IN EINEM UNLIZENSIERTEN FUNKZUGANGSNETZWERK
ATTRIBUER DES STATIONS MOBILES A UN RESEAU CENTRAL DANS UN RESEAU D'ACCES RADIO PIRATE

(43) Date of publication of application: 24.01.2007
(73) Proprietor: Telefonaktiebolaget LM Ericsson (publ), 164 83 Stockholm (SE)
(72) Inventor: NISKA, Håkan, S-587 58 Linköping (SE); VIKBERG, Jari, S-153 38 Järna (SE); NYLANDER, Tomas, S-139 34 Värmdö (SE)
(74) Representative: Gray, Helen Mary
(86) International application number: PCT/EP2004/005158
(87) International publication number: WO 2005/114911

(56) References cited:
- EP-A- 1 207 708
- EP-A- 1 335 619
- WO-A-02/49391
- WO-A-02/076133
- WO-A-02/080603
- WO-A-03/045095

## Description

### Field of invention

The present invention relates to the use of unlicensed radio access networks with cellular communication systems.

### Background art

Mobile communication systems such as GSM, UTMS or CDMA2000 typically consist of a core network portion and a plurality of base stations connected to the core network portion. Each base station is assigned a specific coverage area, the size of which is determined by the power of the base station, the number of likely users in the area and the terrain in which it is located. A mobile station located within the coverage area of a base station is able to establish a radio connection with the base station using a predetermined radio frequency determined by the appropriate licensing authority and through this communicate with other users of the mobile communication network and of other fixed or mobile networks connected thereto.

Unlicensed-radio access networks provide additional access points to cellular mobile communication systems. These access networks typically comprise an access controller connected to a node of the core network of the cellular mobile communication systems over a conventional network interface (e.g. the A-interface or Gb interface for a GSM network). When viewed from the core network portion, this access controller appears very much like a base station subsystem of a conventional access network. The access controller is connected to a plurality of low-power unlicensed radio transceivers, or access points, each capable of supporting unlicensed radio connections with mobile stations MS. Suitable unlicensed-radio formats include digital enhanced cordless telecommunications (DECT), wireless LAN and Bluetooth. An adapted mobile handset capable of operating over both the standard air interface (e.g. the Um interface) and the unlicensed-radio interface means that the subscriber requires only one phone for all environments. The access links are preferably connected to the access controller via a broadband packet-switched network. Ideally, the access network exploits an already existing broadband network having suitable unlicensed radio access points typically provided to enable a subscriber to access the Internet. A mobile station capable of setting up an unlicensed radio link with an access point can then establish a connection with the access controller via the broadband network. An unlicensed radio access network of this kind is described in European patent EP-A-1 207 708.

The access points are low power units with a resultant low range and small coverage area. They are intended to be easily installed via a connection to the broadband and if necessary relocated to another point on the same or a connecting broadband network. This flexibility means that access points connected to the same access controller may be positioned at widely spaced locations. A single access controller may thus control access points having neighbouring public mobile network base stations in many different location or routing areas. This complicates the interaction between the unlicensed radio access network and public licensed mobile network since hanover requires that the identity of cells be defined in all neighbouring cells. The configuration required in both the public licensed mobile network and the unlicensed radio access network when installing or modifying the unlicensed radio access network is thus considerable. This naturally limits the scale of the unlicensed radio access network despite the ease of installation, which in turn limits the efficiency with which the access controllers can be used.

### SUMMARY OF THE INVENTION

It is thus a object of the present invention to improve the efficiency of use of the access controller of an unlicensed radio access network.

This and further objects are achieved in an unlicensed radio access network controller, a mobile communications network and a method as defined in the appended claims.

Specifically, an unlicensed radio access network controller is proposed that is adapted to communicate with the core network portion of at least one public licensed mobile communication network. It is connected to a broadband packet-switched network and is adapted to exchange messages with mobile stations communicating via an unlicensed radio interface with access points that are also connected to the broadband packet-switched network. The access controller is furthermore adapted to selectively communicate with a plurality of mobile service switching nodes within the core network portion and comprises a selection module arranged to select an individual one of the plurality of nodes for communicating with a mobile station via said access network controller. The selection module is adapted to store information relating to the location of a mobile station and to select one of the switching nodes as a function of the location information of said mobile station.

By providing a connection with several mobile service switching nodes (MSCs in the GSM standard) for routing traffic to and from mobile station connected to the unlicensed radio access network the access controller can better distribute traffic over the core network or networks. Moreover, the efficiency of the access network is improved, as the access network is able to serve a large number of access points distributed over several location or routing areas defined in the public licensed mobile network and ensure that traffic to and from mobile stations connected to these access points is routed to the most appropriate switching node in the public licensed mobile network core.

In accordance with a further aspect of the invention, the selection module uses information identifying the mobile station as a selection criteria in addition to the location information. This enables the unlicensed radio access network to be used with not just one but several public licensed mobile networks, with a core network node being selected that corresponds to the mobile operator identified in the mobile station identification. In this way the efficiency of the access controller is still further improved. The modification of the access network is also greatly facilitated.

### BRIEF DESCRIPTION OF THE DRAWINGS

Further objects and advantages of the present invention will become apparent from the following description of the preferred embodiments that are given by way of example with reference to the accompanying drawings. In the figures:
- Fig. 1: schematically depicts parts of a GSM network,
- Fig. 2: schematically illustrates an unlicensed radio access network connected to a conventional GSM network in accordance with the present invention, and
- Fig. 3: is a signalling diagram showing the signalling between a mobile station and access controller in accordance with the present invention.

### DETAILED DESCRIPTION OF THE DRAWINGS

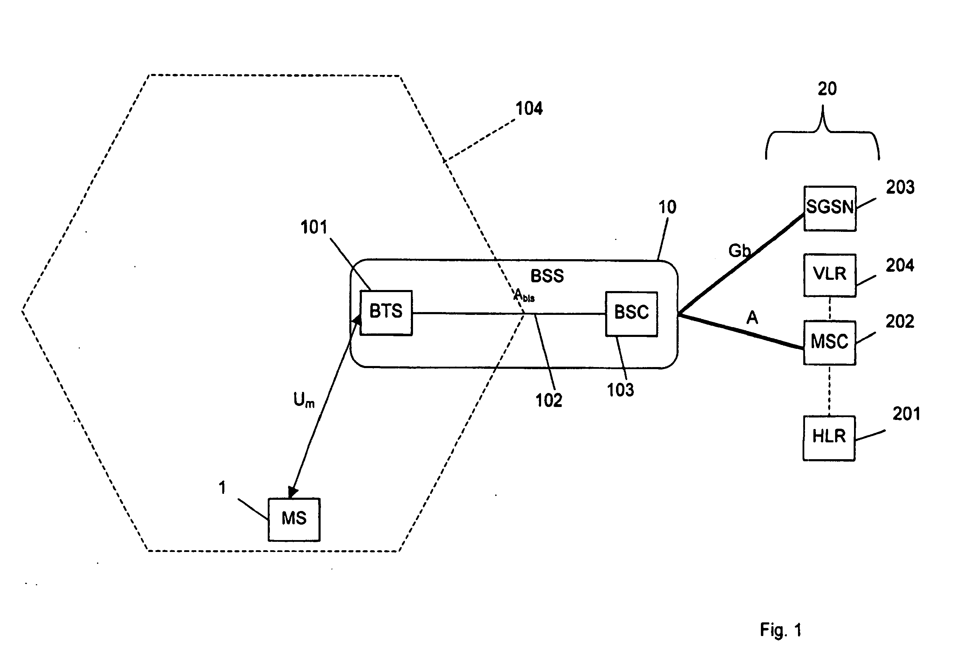

Figure 1 schematically depicts parts of a conventional GSM network. This network is essentially divided into a core network portion 20 and an access portion also known as a base station subsystem BSS 10. The elements of the core network 20 illustrated in the figure include the mobile switching centers or MSCs 202, associated home location register HLR 201 and visitor location register VLR 204 and General Packet Radio Service switching nodes SGSNs 203. The function and structure of these conventional GSM architecture elements are known to those skilled in the art and will not be described in further detail here. Although not shown in the figure, it will be understood by those skilled in the art that the core network portion may include access to other mobile and fixed-line networks, such as ISDN and PSTN networks, packet and circuit switched packet data networks such as intranets, extranets and the Internet through one or more gateway nodes.

The access portion essentially consists of base station subsystems BSS 10, one of which is illustrated in Fig. 1, which communicate via defined fixed standard A and Gb interfaces with MSCs 202 and SGSNs 203 in the core network portion 20. Each base station subsystem BSS 10 includes a base station controller BSC 103 which communicates with one or more base transceiver stations BTS 101 via the defined A_{bis} air interface 102. The base transceiver stations 101 communicate with mobile stations MS 1 over the GSM standard Uₘ radio air interface. It will be understood that while the BTS 101 and BSC 103 are depicted as forming a single entity in the BSS 10, the BSC 103 is often separate from the BTSs 101 and may even be located at the mobile services switching centre MSC 202. Each base transceiver station BTS 101 defines a coverage area represented in Fig. 1 by a hexagonal cell 104. Any mobile station MS 1 located within this cell is able to communicate with the base transceiver station BTS 101.

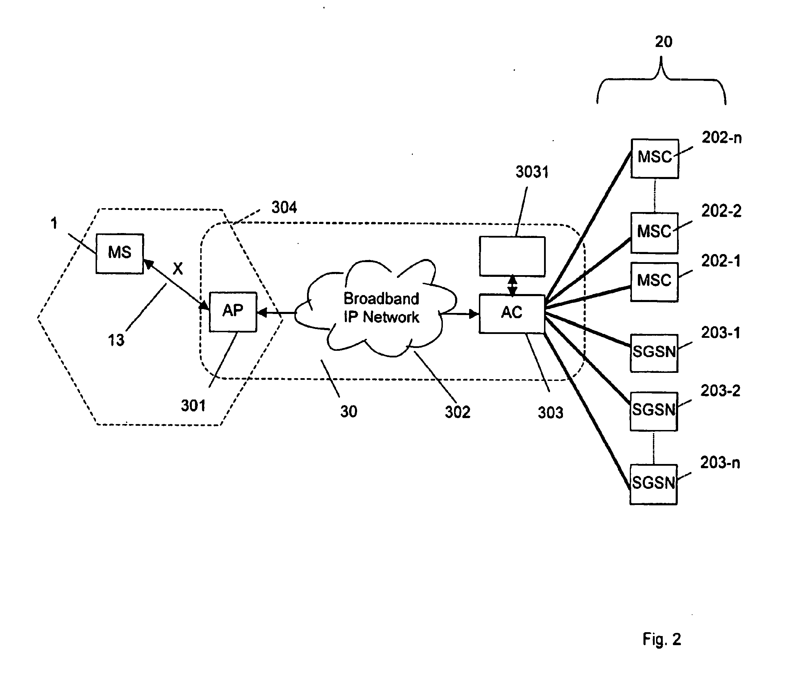

Turning now to Fig. 2 there is illustrated a modified access network 30, which hereinafter will be described as an unlicensed-radio access network portion. This unlicensed radio access network provides an alternative means for a mobile station 1 to access the core network portion 20 of the public mobile communication network, and through this, other communication networks via an unlicensed-radio interface X, represented in Fig. 2 by the bi-directional arrow 13. By unlicensed-radio is meant any radio protocol that does not require the operator running the mobile network to have obtained a license from the appropriate regulatory body. In general, such unlicensed-radio technologies must be low power and thus of limited range compared to licensed mobile radio services. This means that the battery lifetime of mobile stations will be greater. Moreover, because the range is low, the unlicensed-radio may be a broadband radio, thus providing improved voice quality. The radio interface may utilise any suitable unlicensed-radio protocol, for example a wireless LAN (W-LAN) protocol or Digital Enhanced Cordless Telecommunications (DECT). Preferably, however, Bluetooth radio is utilised, which has a high bandwidth and lower power consumption than conventional public mobile network radio.

The Bluetooth standard specifies a two-way digital radio link for short-range connections between different devices. Devices are equipped with a transceiver that transmits and receives in a frequency band around 2.45GHz. This band is available globally with some variation of bandwidth depending on the country. In addition to data, up to three voice channels are available. Each device has a unique 48-bit address from the IEEE 802 standard. Built-in encryption and verification is also available.

The access network portion 30 is accessed via access points AP 301 that are adapted to communicate across the Bluetooth interface. Only one access point AP 301 is illustrated in Fig. 2, but it will be understood that many hundreds of these elements may be included in the unlicensed-radio access network 30. This element handles the radio link protocols with the unlicensed radio interface portion of the mobile station MS 1 and contains radio transceivers that define a coverage area, hereinafter defined as a mini-cell 304 in a similar manner to the operation of a conventional GSM base station transceiver BTS 101. The low power of the unlicensed radio transceivers in the access points AP 301 means that the mini-cells 304 will be considerably smaller than the cells of a conventional public licensed cellular system, with a coverage range of between 50m to 200m. This means that several mini-cells 304 may be provided in a relatively small area, for example an office building. Also, mini-cells 304 will often be located within conventional public licensed cells 104.

All communication via the access points AP 301 is controlled by an access controller AC 303. The access controller AC 303 provides the connection between the core network 20 and mobile station 1. The joint function of the access point AP 301 and the access controller AC 303 emulates the operation of the BSS 10 towards the core network 20. In other words, when viewed from the nodes of the core network 20, the access network portion 30 constituted by the access points AP 301 and the access controller AC 303 looks like a conventional access network portion 10.

The interface between the access point AP 301 and the access controller AC 303 is provided by a packet-switched broadband network, which may be a fixed network. The access point 301 is intended to be a small device that a subscriber can purchase and install in a desired location such as the home or an office environment to obtain a fixed access to the mobile network. However, access points 301 could also be installed by operators in traffic hotspots. In order to reduce the installation costs on the part of the operator, the interface between the access point 301 and the access controller 303 preferably exploits a connection provided by an already existing network 302. Suitable networks might include those based on ADSL, Ethernet, LMDS, or the like. Home connections to such networks are increasingly available to subscribers while access points to such networks are becoming widespread in public and commercial buildings. Although not shown in Fig. 2, the access point AP 301 will be connected to a network terminal giving access to the network 302, while the access controller AC 303 may be connected to an edge router ER of the network 302 that also links the network 302 to other networks such as intranets and the internet. The Internet protocol, IP, is used for communication over the network 302 to render the transport of data independent of the network type.

The access point AP 301 may serve as a dedicated access point to the unlicensed-radio access network. In this case the access point AP 301 is capable of communicating independently with the mobile station 10 over the unlicensed-radio interface X or with the access controller 303 over the broadband network interface 302. The access point AP 301 utilises the standard protocols and functions to ascertain to which access controller AC 303 it should connect, and also to establish a connection and register with this access controller AC 303.

In an alternative embodiment, the access point 301 serves as an essentially transparent access point when viewed both from the access controller 303 and the mobile station 1. In other words, this access point relays all information at the IP level and above between the mobile station 1 and the access controller 303. It simply effects the conversion between the OSI reference model layer 1 and 2 unlicensed-radio and terrestrial access layer services. Accordingly, the mobile station 1 establishes a connection with the access controller 303 without recognising the access point as a node in the connection. Similarly the access controller 303 could establish a connection with the mobile station 1 directly.

The link between the mobile station MS 1 and the access controller AC 303 over the broadband IP network 302 is always open, so that this connection is always available without the need for reserving a channel. Specifically, a transport protocol is utilised that maintains a connection state between a mobile station MS 1 and the access controller AC 303. One suitable transport protocol is the Transmission Control Protocol (TCP), however, other protocols such as the User Datagram Protocol (UDP) or the Signalling Control Transfer Protocol could also be used. While the network 302 is preferably an IP-based network, ATM-based networks could also be used. In particular when DSL technologies are used in this network, they could be used directly on top of the ATM layer, since they are based on ATM. Naturally, an ATM based network could also be used to transport IP, serving as a base layer.

The applications that run on the mobile station MS 1 on top of the public mobile network radio interfaces also run on top of Bluetooth radio between the mobile station 1 and the access point AP 301 and over IP to the access controller AC 303.

The access point AP 301 is installed by plugging it in to a port of a suitable modem, such as an ADSL or CATV modem, to access the fixed network 302. Alternatively, the access point AP 301 could be integrated in such a modem. The port is in contact with an intranet that is either bridged or routed on the IP level.

As mentioned above, the access controller AC 303 provides the interface with the core network nodes. However, in accordance with the present invention the access controller AC 303 is not connected to a single mobile services switching center MSC 202 and GPRS switching node SGSN 203, but rather is connected to a plurality of each of these nodes. In Fig. 2, the access controller AC 303 is connected to n MSCs 202-1 to 202-n and n SGSNs 203-1 to 203-n. At any one time, a connection with a mobile station MS 1 is established via the access controller with one core network node 202, 203 only. However, the access controller AC 303 selects the best core network node 202, 203 depending on the location of the mobile station MS 1. In order to perform this selection, the access controller AC 303 uses a selection function illustrated schematically in Fig. 2 as a separate module 3031 connected to the access controller AC 303. This selection module 3031 may form part of the access controller AC 303 or may alternatively be located at a separate location, for example on the broadband network 302, that is accessible by the access controller AC 303.

The AC selection module 3031 holds a database of information relating to all MS connected to unlicensed radio access network and uses this information to select the most suitable core network node. This information relates to the location of the mobile station MS 1.

Since the coverage areas of access points AP 301 will in most cases be entered through a public licensed network coverage cell - indeed in many cases, the cell 304 defined by an access point AP will be located within one or more public licensed network cells 104 - this location information preferably identifies the last public licensed network cell the mobile station MS 1 was registered in. Cells in the GSM cellular system are defined by a cell identifier or Cell Global Identifier CGI. This identifier contains a mobile country code MCC, a mobile network code MNC, a location area code LAC which identifies the location area and a cell identifier, which is unique to the cell. It is the location area identified that defines a single mobile services switching center MSC 202. Similar information is used to identify cells in the packet service network. In this case the identifier includes a routing area code, which is used to identify a single GPRS service node SGSN 203. The selection module 3031 thus holds tables mapping location area information with mobile services switching centers MSC 202 and the routing area information with GPRS service nodes SGSN 203. The access controller 303 thus receives the relevant location area information or routing area information from the mobile station and compares this with the tables held in the selection module 3031 to determine with which core network node 202; 203 a connection should be established for this mobile station.

For those access points AP 301 that are not located within or adjacent a public licensed network cell 104, the identity and location of the access point may be used to select the appropriate core network node. In this case, the database should contain information as to whether GSM coverage is available at the location of the access point AP 301. This information could be combined with the identification and location of the access point AP 301.

Whilst the unlicensed radio access network illustrated in Fig. 2 is connected to the core network portion of a single public licensed mobile network the access controller AC 303 could be connected to the nodes of several different mobile core networks operated by the same or even different operators. In this case, the selection of which core network node to use for any individual mobile station would include the identification of the mobile station and its home operator. In the GSM system a suitable identifier is the International Mobile Subscriber Identifier IMSI, which is made up of three parts: a mobile country code MCC, which consists of three digits and uniquely identifies the country of domicile of the mobile subscriber; a mobile network code MNC, consisting of two or three digits for GSM applications and which identifies the home GSM network (i.e. the network operator) of the mobile subscriber; and a mobile subscriber identification number MSIN, which identifies the mobile subscriber within a GSM PLMN. The first two parts of the IMSI, namely the MCC and MNC, serve to identify a mobile operator. The value of these identifiers can thus be used by the selection module 3031 to select an appropriate core network node 202; 203. Depending on the mobile operator concerned, this may mean a core network node that is owned by the operator or alternatively, one that is owned by an operator that has an agreement with the mobile station operator. This additional selection parameter enables the unlicensed radio access network to be shared by several mobile core network operators.

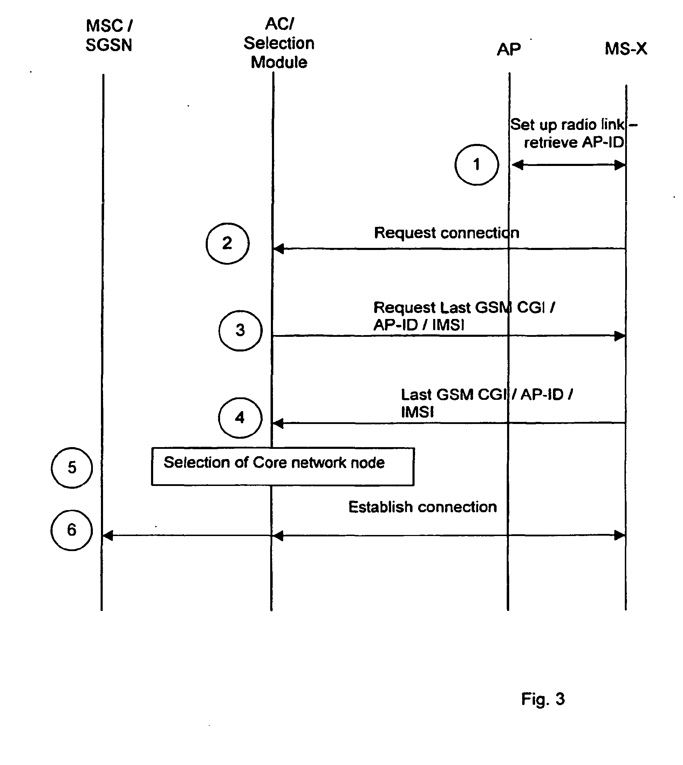

Fig. 3 shows the signalling between a mobile station MS 1 and access controller AC 303 via a transparent access point AP 301 required to enable the selection module 3031 to obtain the data required to select an appropriate core network node for the connection. At event 1, the mobile station establishes the unlicensed radio link with the access point AP and at the same time, the mobile station retrieves information identifying the access point, AP-ID. If appropriate, this identifying information also provides information on the location of the access point AP. One manner of achieving this is to use the access point identification AP-ID as a key to location information stored in the access controller AC 303. Specifically, the access controller AC 303 would hold a database or lookup table containing location information relating to an access point. Upon receipt of the access point identification AP-ID, the access controller AC 303 - or the selection module 3031 - uses this AP-ID to access the location information indicating which core network node to connect the mobile station to. The location information stored in the database or lookup table may be obtained in several ways. Specifically, a dedicated access point 301 could communicate its location to the access controller AC 303 when it first registers with the access controller AC. Alternatively, access points AP 103, whether dedicated or transparent could contain some kind of positioning system, such as the Global Positioning System GPS enabling it to report its location information in terms of longitude and latitude to the access controller AC 303 either directly or through the mobile station MS 1. This information would then be stored in the access controller 303 until the access point 103 is no longer connected to the access network.

At event 2, the mobile station sends a connection request to the access sdxcontroller AC. In response, the access controller AC requests location information at event 3. This information includes the last GSM-CGI the mobile station was connected to or a list of the previous neighbouring GSM-CGIs and may also include the access point identifier and possibly also the International Mobile Subscriber Identity of the mobile station. The last two items of information may be communicated to the access controller in other messages and for other reasons. In this case, the access controller need simply supply this information to the selection module 3031 to be used in the selection algorithm. The requested information is transmitted by the mobile station at event 4. At event 5, the selection module uses the information supplied to select the core network node 202 or 203 that is best located to handle the transaction initiated by the mobile station MS. The connection with the core network is then established at event 6. In an alternative procedure, the mobile station MS 1 could provide the various pieces of location information, i.e. a list of GSM-CGIs, the AP-ID and the IMSI unsolicited at event 2. In this case events 3 and 4 in Fig. 3 are not needed.

This signalling diagram represents the case when the access point AP 301 is a transparent access point as discussed above. It will be understood by those skilled in the art that if the access point AP 301 were a dedicated access point, the signalling prior to establishing a connection would be carried out in two stages, the first being between the mobile station MS and access point AP and the second between the access point and the access controller. Furthermore, rather than the mobile station interrogating the access point for its access point identifier, this information would be obtained through an exchange of messages between the access controller AC and the access point AP when the access point initially connects to the unlicensed radio access network or on being rebooted.

Since the mobile station MS 1 is mobile, its location, and consequently the access point AP 103 through which it is connected to the unlicensed radio access network may change. This is signalled to the access controller AC 303 by the mobile station MS 1 using an information update message. Such a message will normally include a new AP-ID corresponding to the new access point AP 103, however, it may alternatively contain GSM cell identification information, such as the GSM-CGI if the mobile station MS 1 is actively scanning on GSM radio also. Any change in the registered mobile station location information may result in the access controller 303, or rather its selection module 3031, directing all further transactions to and from this mobile station to a different core network node 202, 203.

As this arrangement means that any mobile initiated transaction is automatically routed via the most appropriate core network node 202 or 203, handover between the unlicensed radio access network and a public licensed mobile network is greatly facilitated. In particular, the amount of configuration required in the public licensed mobile core network is minimised. The identity of the unlicensed radio access network must of course be defined in each of the core network nodes connected to the access controller AC.

Whilst the arrangement according to the invention has been described with specific reference to the GSM standard, it will be understood by those skilled in the art that this arrangement is applicable to other cellular network systems, notably UTMS or CDMA2000 and will provide the same advantages.

## Claims

1. An access network controller (303) adapted to communicate with the core network portion (10) of at least one public licensed mobile communication network and connected to a broadband packet-switched network (302), said access network controller (303) being adapted to exchange messages with mobile stations (1) communicating via an unlicensed radio interface with access points (301) connected to said broadband packet-switched network (302), **characterised in that** said access network controller (303) is adapted to selectively communicate with a plurality of switching nodes (202, 203) within said core network portion, and comprises a selection module (3031) for selecting one of said switching nodes (202, 203) for communicating with a mobile station (1) via said access network controller (303), said selection module being adapted to store information relating to the location of a mobile station (1) and to select one of said plurality of said switching nodes (202, 203) as a function of the location information of said mobile station.

2. An access network controller as claimed in claim 1, **characterised in that** said plurality of switching nodes include mobile services switching nodes (202) and packet service switching nodes (203).

3. An access network controller as claimed in claim 1 or 2, **characterised in that** said selection module (3031) is further adapted to store information relating to the identity of said mobile station (1) and to select one of said plurality of switching nodes (202; 203) as a function of said mobile station identity information.

4. An access network controller as claimed in claim 3, **characterised in that** said mobile station location information includes information identifying a public licensed mobile network cell in which said mobile station was last active.

5. An access network controller as claimed in claim 4, **characterised in that** said public licensed mobile network cell identifying information comprises at least part of the GSM Global Cell Identifier.

6. An access network controller as claimed in any one of claims 3 or 5, **characterised in that** said mobile station location information includes information identifying an access point (301) via which said mobile station (1) communicates with said network controller (303).

7. An access network controller as claimed in any one of claims 3 to 6, **characterised in that** said mobile station location information includes information identifying said mobile station.

8. An access network controller as claimed in claim 7, **characterised in that** said mobile station location information comprises at least part of the GSM International Mobile Subscriber Identifier.

9. A mobile communications network including a plurality of public licensed mobile communication core networks each having switching nodes and an unlicensed radio access network including an access network controller (303) adapted to selectively communicate with any one of said switching nodes and connected to a broadband packet-switched network (302), said access network controller (303) being adapted to receive messages from mobile stations (1) communicating via an unlicensed radio interface with access points (301) connected to said broadband packet-switched network (302), and comprising a selection module (3031) arranged to select an individual one of said switching nodes for communicating with a mobile station (1) via said access network controller (303), wherein said selection module (3031) is adapted to store information relating to the location and the identification of the mobile station (1) and to select one of said core network nodes (202; 203) as a function of said mobile station location and identification.

10. A communications network as claimed in claim 9, wherein said switching nodes include mobile services switching nodes and packet service switching nodes.

11. A method of selecting one of a plurality of switching or support nodes (202, 203) within a core network portion of at least one public licensed mobile communication network for communication with a mobile station, said method being performed in an access network controller (303) adapted to communicate with said core network portion (10) and connected to a broadband packet-switched network (302), said access network controller (303) being adapted to exchange messages with mobile stations (1) communicating via an unlicensed radio interface with access points (301) connected to said broadband packet-switched network (302), said method including the steps of:
obtaining information relating to the location of said mobile station (1) from said mobile station,
using a selection module (3031) to select one of said core network switching or support nodes for communication with said mobile on the basis of the location information obtained from said mobile station.

12. A method as claimed in claim 11, further including the step of:
obtaining information relating to the identity of said mobile station and
using said mobile station identity information as an additional selection parameter for selecting one of said switching or support nodes.

13. A method as claimed in claim 11 or 12, wherein said step of obtaining mobile station location information includes obtaining information identifying a public licensed mobile network cell in which said mobile station was last active.

14. A method as claimed in claim 13, wherein said public licensed mobile network cell identifying information comprises at least part of the GSM Global Cell Identifier.

15. A method as claimed in any one of claims 11 to 12, wherein said step of obtaining mobile station location information includes obtaining information identifying an access point (301) via which said mobile station (1) communicates with said network controller (303).

16. A method as claimed in any one of claims 11 to 15, wherein said mobile station location information includes information identifying said mobile station.

17. A method as claimed in any one of claims 11 to 15, wherein said mobile station location information comprises at least part of the GSM International Mobile Subscriber Identifier.

## Patentansprüche

1. Zugangsnetzsteuerung (303), die so ausgelegt ist, dass sie mit dem Kernnetzabschnitt (10) mindestens eines öffentlichen lizenzierten Mobilkommunikationsnetzes kommuniziert und mit einem paketvermittelten Breitbandnetz (302) verbunden ist, wobei die Zugangsnetzsteuerung (303) so ausgelegt ist, dass sie Nachrichten mit Mobilstationen (1) austauscht, die über eine unlizenzierte Funkschnittstelle mit Zugangspunkten (301) kommunizieren, die mit dem paketvermittelten Breitbandnetz (302) verbunden sind, **dadurch gekennzeichnet, dass** die Zugangsnetzsteuerung (303) so ausgelegt ist, dass sie mit einer Mehrzahl von Vermittlungsknoten (202, 203) innerhalb des Kernnetzabschnitts selektiv kommuniziert, und ein Auswahlmodul (3031) zum Auswählen eines der Vermittlungsknoten (202, 203) zum Kommunizieren mit einer Mobilstation (1) über die Zugangsnetzsteuerung (303) umfasst, wobei das Auswahlmodul so ausgelegt ist, dass es Informationen in Bezug auf den Aufenthaltsort einer Mobilstation (1) speichert und einen der Mehrzahl von Vermittlungsknoten (202, 203) in Abhängigkeit von den Aufenthaltsortsinformationen der Mobilstation auswählt.

2. Zugangsnetzsteuerung nach Anspruch 1, **dadurch gekennzeichnet, dass** die Mehrzahl von Vermittlungsknoten Mobildienstvermittlungsknoten (202) und Paketdienstvermittlungsknoten (203) umfasst.

3. Zugangsnetzsteuerung nach Anspruch 1 oder 2, **dadurch gekennzeichnet, dass** das Auswahlmodul (3031) ferner so ausgelegt ist, dass es Informationen in Bezug auf die Identität der Mobilstation (1) speichert und einen der Mehrzahl von Vermittlungsknoten (202; 203) in Abhängigkeit von den Identitätsinformationen der Mobilstation auswählt.

4. Zugangsnetzsteuerung nach Anspruch 3, **dadurch gekennzeichnet, dass** die Aufenthaltsinformationen der Mobilstation Informationen umfassen, die eine öffentliche lizenzierte Mobilnetzzelle identifizieren, in welcher die Mobilstation zuletzt aktiv war.

5. Zugangsnetzsteuerung nach Anspruch 4, **dadurch gekennzeichnet, dass** die Informationen, welche die öffentliche lizenzierte Mobilnetzzelle identifizieren, mindestens einen Teil der globalen GSM-Zellkennung umfassen.

6. Zugangsnetzsteuerung nach einem der Ansprüche 3 bis 5, **dadurch gekennzeichnet, dass** die Aufenthaltsortsinformationen der Mobilstation Informationen umfassen, die einen Zugangspunkt (301) identifizieren, über welchen die Mobilstation (1) mit der Netzsteuerung (303) kommuniziert.

7. Zugangsnetzsteuerung nach einem der Ansprüche 3 bis 6, **dadurch gekennzeichnet, dass** die Aufenthaltsortsinformationen der Mobilstation Informationen umfassen, welche die Mobilstation identifizieren.

8. Zugangsnetzsteuerung nach Anspruch 7, **dadurch gekennzeichnet, dass** die Aufenthaltsortsinformationen der Mobilstation mindestens einen Teil der internationalen GSM-Mobilteilnehmerkennung umfassen.

9. Mobilkommunikationsnetz, umfassend eine Mehrzahl von öffentlichen lizenzierten Mobilkommunikationskernnetzen, die jeweils Vermittlungsknoten und ein unlizenziertes Funkzugangsnetz aufweisen, das eine Zugangsnetzsteuerung (303) umfasst, die so ausgelegt ist, dass sie selektiv mit einem beliebigen der Vermittlungsknoten kommuniziert und mit einem paketvermittelten Breitbandnetz (302) verbunden ist, wobei die Zugangsnetzsteuerung (303) so ausgelegt ist, dass sie Nachrichten von Mobilstationen (1) empfängt, die über eine unlizenziertes Funkschnittstelle mit Zugangspunkten (301) kommunizieren, die mit dem paketvermittelten Breitbandnetz (302) verbunden sind, und ein Auswahlmodul (3031) umfasst, das so ausgelegt ist, dass es einen einzelnen der Vermittlungsknoten zum Kommunizieren mit einer Mobilstation (1) über die Zugangsnetzsteuerung (303) auswählt, wobei das Auswahlmodul (3031) so ausgelegt ist, dass es Informationen in Bezug auf den Aufenthaltsort und die Identifikation der Mobilstation (1) speichert und einen der Kernnetzknoten (202; 203) in Abhängigkeit vom Aufenthaltsort und der Identifikation der Mobilstation auswählt.

10. Kommunikationsnetz nach Anspruch 9, **dadurch gekennzeichnet, dass** die Vermittlungsknoten Mobildienstvermittlungsknoten und Paketdienstvermittlungsknoten umfassen.

11. Verfahren zum Auswählen eines von einer Mehrzahl von Vermittlungs- oder Unterstützungsknoten (202, 203) innerhalb eines Kernnetzabschnitts mindestens eines öffentlichen lizenzierten Mobilkommunikationsnetzes zur Kommunikation mit einer Mobilstation, wobei das Verfahren in einer Zugangsnetzsteuerung (303) durchgeführt wird, die so ausgelegt ist, dass sie mit dem Kernnetzabschnitt (10) kommuniziert und mit einem paketvermittelten Breitbandnetz (302) verbunden ist, wobei die Zugangsnetzsteuerung (303) so ausgelegt ist, dass sie Nachrichten mit Mobilstationen (1) austauscht, die über eine unlizenzierte Funkschnittstelle mit Zugangspunkten (301) kommunizieren, die mit dem paketvermittelten Breitbandnetz (302) verbunden sind, wobei das Verfahren die folgenden Schritte umfasst:
Erhalten von Informationen in Bezug auf den Aufenthaltsort der Mobilstation (1) von der Mobilstation,
Verwenden eines Auswahlmoduls (3031), um einen der Vermittlungs- oder -Unterstützungsknoten des Kernnetzes zur Kommunikation mit der Mobilstation auf der Basis der Aufenthaltsortsinformationen auszuwählen, die von der Mobilstation erhalten werden.

12. Verfahren nach Anspruch 11, ferner umfassend den folgenden Schritt:
Erhalten von Informationen in Bezug auf die Identität der Mobilstation und Verwenden der Identitätsinformationen der Mobilstation als einen zusätzlichen Auswahlparameter zum Auswählen eines der Vermittlungs- oder Unterstützungsknoten.

13. Verfahren nach Anspruch 11 oder 12, wobei der Schritt des Erhaltens von Aufenthaltsinformationen der Mobilstation ein Erhalten von Informationen umfasst, die eine öffentliche lizenzierte Mobilnetzzelle identifizieren, in welcher die Mobilstation zuletzt aktiv war.

14. Verfahren nach Anspruch 13, wobei die Informationen, welche die öffentliche lizenzierte Mobilnetzzelle identifizieren, mindestens einen Teil der globalen GSM-Zellkennung umfassen.

15. Verfahren nach einem der Ansprüche 11 bis 12, wobei der Schritt des Erhaltens von Aufenthaltsinformationen der Mobilstation ein Erhalten von Informationen umfassen, die einen Zugangspunkt (301) identifizieren, über den die Mobilstation (1) mit der Netzsteuerung (303) kommuniziert.

16. Verfahren nach einem der Ansprüche 11 bis 15, wobei die Aufenthaltsortsinformationen der Mobilstation Informationen umfassen, welche die Mobilstation identifizieren.

17. Verfahren nach einem der Ansprüche 11 bis 15, wobei die Aufenthaltsortsinformationen der Mobilstation Informationen mindestens einen Teil der internationalen GSM-Mobilteilnehmerkennung umfassen.

## Revendications

1. Contrôleur de réseau d'accès (303) adapté afin de communiquer avec la portion de réseau central (10) d'au moins un réseau de communication mobile public sous licence et connecté à un réseau à commutation de paquets large bande (302), ledit contrôleur de réseau d'accès (303) étant adapté afin d'échanger des messages avec des stations mobiles (1) communiquant avec une interface radio pirate avec des points d'accès (301) connectés audit réseau à commutation de paquets large bande (302), **caractérisé en ce que** ledit contrôleur de réseau d'accès (303) est adapté afin de communiquer sélectivement avec une pluralité de noeuds de commutation (202, 203) à l'intérieur de ladite portion de réseau central, et comprend un module de sélection (3031) pour sélectionner un desdits noeuds de commutation (202, 203) pour communiquer avec une station mobile (1) via ledit contrôleur de réseau d'accès (303), ledit module de sélection étant adapté afin de mémoriser une information relative à la localisation d'une station mobile (1) et sélectionner un de ladite pluralité de noeuds de commutation (202, 203) comme une fonction de l'information de localisation de ladite station mobile.

2. Contrôleur de réseau d'accès selon la revendication 1, **caractérisé en ce que** ladite pluralité de noeuds de commutation inclut des noeuds de commutation pour services mobiles (202) et des noeuds de commutation pour service de paquet (203).

3. Contrôleur de réseau d'accès selon la revendication 1 ou 2, **caractérisé en ce que** ledit module de sélection (3031) est en outre adapté afin de mémoriser une information relative à l'identité de ladite station mobile (1) et sélectionner un de ladite pluralité de noeuds de commutation (202 ; 203) comme une fonction de ladite information d'identité de station mobile.

4. Contrôleur de réseau d'accès selon la revendication 3, **caractérisé en ce que** ladite information de localisation de station mobile inclut une information identifiant une cellule de réseau mobile public sous licence dans laquelle ladite station mobile a été active en dernier.

5. Contrôleur de réseau d'accès selon la revendication 4, **caractérisé en ce que** ladite cellule de réseau mobile public sous licence identifiant une information comprend au moins une partie de l'identifiant de cellule mondial GSM.

6. Contrôleur de réseau d'accès selon une quelconque des revendications 3 à 5, **caractérisé en ce que** ladite information de localisation de station mobile inclut une information identifiant un point d'accès (301) via lequel ladite station mobile (1) communique avec ledit contrôleur de réseau (303).

7. Contrôleur de réseau d'accès selon une quelconque des revendications 3 à 6, **caractérisé en ce que** ladite information de localisation de station mobile inclut une information identifiant ladite station mobile.

8. Contrôleur de réseau d'accès selon la revendication 7, **caractérisé en ce que** ladite information de localisation de station mobile comprend au moins une partie de l'identifiant d'abonné mobile international GSM.

9. Réseau de communication mobile incluant une pluralité de réseaux centraux de communication mobile sous licence publics ayant chacun des noeuds de commutation et un réseau d'accès radio pirate incluant un contrôleur de réseau d'accès (303) adapté afin de communiquer sélectivement avec n'importe lequel desdits noeuds de commutation et connecté à un réseau à commutation de paquets large bande (302), ledit contrôleur de réseau d'accès (303) étant adapté afin de recevoir des messages depuis les stations mobiles (1) communiquant via une interface radio pirate avec des points d'accès (301) connectés audit réseau à commutation de paquets large bande (302), et comprenant un module de sélection (3031) agencé afin de sélectionner un noeud individuel desdits noeuds de commutation pour communiquer avec une station mobile (1) via ledit contrôleur de réseau d'accès (303), dans lequel ledit module de sélection (3031) est adapté afin de mémoriser une information relative à la localisation et l'identification de la station mobile (1) et sélectionner un desdits noeuds de réseau central (202 ; 203) comme une fonction de ladite localisation et identification de station mobile.

10. Réseau de communication selon la revendication 9, dans lequel lesdits noeuds de commutation incluent des noeuds de commutation pour services mobiles et des noeuds de commutation pour service de paquets.

11. Procédé de sélection d'une pluralité de noeuds de commutation ou de prise en charge (202, 203) à l'intérieur d'une portion de réseau central d'au moins un réseau de communication mobile public sous licence en vue d'une communication avec une station mobile, ledit procédé étant mis en oeuvre dans un contrôleur de réseau d'accès (303) adapté afin de communiquer avec ladite portion de réseau central (10) et connecté à un réseau à commutation de paquets large bande (302), ledit contrôleur de réseau d'accès (303) étant adapté afin d'échanger des messages avec les stations mobiles (1) communiquant via une interface radio pirate avec des points d'accès (301) connectés audit réseau à commutation de paquets large bande (302), ledit procédé incluant les étapes consistant à :
obtenir de ladite station mobile une information relative à la localisation de ladite station mobile (1),
utiliser un module de sélection (3031) pour sélectionner un desdits noeuds de commutation ou de prise en charge de réseau central en vue d'une communication avec ladite station mobile sur la base de l'information de position obtenue de ladite station mobile.

12. Procédé selon la revendication 11, incluant en outre l'étape consistant à :
obtenir l'information relative à l'identité de ladite station mobile et utiliser ladite information d'identité de station mobile comme paramètre de sélection additionnel pour sélectionner un desdits noeuds de commutation ou de prise en charge.

13. Procédé selon la revendication 11 ou 12, dans lequel ladite étape d'obtention d'information de localisation de station mobile inclut d'obtenir une information identifiant une cellule de réseau mobile public sous licence dans laquelle ladite station mobile a été active en dernier.

14. Procédé selon la revendication 13, dans lequel ladite cellule de réseau mobile public sous licence identifiant l'information comprend au moins une partie de l'identifiant de cellule mondial GSM.

15. Procédé selon une quelconque des revendications 11 à 12, dans lequel ladite étape d'obtention d'une information de localisation de station mobile inclut d'obtenir une information identifiant un point d'accès (301) via lequel ladite station mobile (1) communique avec ledit contrôleur de réseau (303).

16. Procédé selon une quelconque des revendications 11 à 15, dans lequel ladite information de localisation de station mobile inclut une information identifiant ladite station mobile.

17. Procédé selon une quelconque des revendications 11 à 15, dans lequel ladite information de localisation de station mobile comprend au moins une partie de l'identifiant d'abonné mobile international GSM.
